# EUROPÄISCHE PATENTSCHRIFT

(11) **EP 2 840 393 B1**
(45) Veröffentlichungstag und Bekanntmachung des Hinweises auf die Patenterteilung: **05.06.2019**
(21) Anmeldenummer: 14002543.8
(22) Anmeldetag: 23.07.2014
(51) Int. Cl.: G01N 30/74, G01N 21/33, G01N 21/05, G01N 21/27

(54) **UV/VIS HPLC-Fotometer**
UV/VIS HPLC-Photometer
Photomètre UV-visible pour l'HPLC

(30) Priorität: 23.08.2013 DE 102013013975
(43) Veröffentlichungstag der Anmeldung: 25.02.2015
(73) Patentinhaber: SunChrom Wissenschaftliche Geräte GmbH, 61381 Friedrichsdorf (DE)
(72) Erfinder: Barka, Günes, 61381 Friedrichsdorf (DE)
(74) Vertreter: Patentanwälte Olbricht Buchhold Keulertz

(56) Entgegenhaltungen:
- WO-A1-82/02952
- WO-A1-2012/046096
- US-A1- 2003 174 321
- IVO M. RAIMUNDO ET AL: "Signal-to-noise optimization and evaluation of a home-made visible diode-array spectrophotometer", JOURNAL OF AUTOMATIC CHEMISTRY, Bd. 15, Nr. 6, 1. Januar 1993 (1993-01-01) , Seiten 227-232, XP055158532, ISSN: 0142-0453, DOI: 10.1155/S146392469300029X
- YASUDA T ET AL: "ADAPTIVE-INTEGRATION-TIME IMAGE SENSOR WITH REAL-TIME RECONSTRUCTION FUNCTION", IEEE TRANSACTIONS ON ELECTRON DEVICES, IEEE SERVICE CENTER, PISACATAWAY, NJ, US, Bd. 50, Nr. 1, 1. Januar 2003 (2003-01-01) , Seiten 111-120, XP001170408, ISSN: 0018-9383, DOI: 10.1109/TED.2002.806959

## Beschreibung

Die vorliegende Erfindung befasst sich mit einem UV/VIS HPLC-Photometer mit wenigstens einer Nano-Durchflusszelle, wobei eine Lichtquelle einen Referenz- und einen Samplelichtkanal speist und zur Auswertung des Referenzkanals eine Referenzfotodiode und zur Auswertung des Samplelichtkanals, der durch die Nano-Durchflusszelle geführt ist, eine Samplefotodiode vorgesehen ist, wobei z.B. eine Auswertvorrichtung zum Auswerten die Signale der beiden Fotodioden vorgesehen ist.

Normalerweise werden UV/VIS Photometer in der Hochleistungs-Flüssigkeitschromatographie (HPLC) überwiegend in dem sogenannten analytischen Bereich in Verbindung mit Trennsäuleninnendurchmesser zwischen 4,6 und 3 mm eingesetzt. Bei Säulen mit kleinerem Innendurchmesser kommen andere, spezielle Durchflusszellen in Einsatz. Diese Zellen haben kleinere Volumina, um die Vermischung und Peakverbreiterung zu minimieren.

Wenn die Säulendurchmesser kleiner werden, werden die Peakvolumina ebenfalls kleiner. Um die Peaks sauber voneinander zu trennen, werden Durchflusszellen mit ebenfalls kleineren Volumina benötigt. Dadurch werden auch das illuminierte, d.h. durch Licht durchstrahlte Volumen und der Durchmesser ebenfalls kleiner. Die Transmission der Zelle nimmt ab und proportional dazu nimmt das Signalrauschen der Fotodioden zu.

Bei der Detektion kommt es auf das Signal-Rausch-Verhältnis an. So liegt die Detektionsgrenze LOD (limit of detection) bei ungefähr einem minimalen Verhältnis von Signal zu Rauschen (S/N) von 3:1. Mit anderen Worten kann ein Signal von dem Rauschen nur dann unterschieden werden, wenn das Verhältnis mindestens drei zu eins beträgt.

Für eine zuverlässige Quantifizierung LOQ (limit of quantification) muss ein S/R-Verhältnis von mindestens 10:1 bis 20:1 erreicht werden. Manche Vorschriften schreiben sogar ein Verhältnis von 30:1 vor.

Derzeit werden in der Zell- und Proteinforschung Geräte benötigt, die mit der geforderten Reduzierung der Stoffmenge mithalten können. Da die Stoffmenge an die Grenzen von Femtomol und sogar darunter angekommen ist, werden Säulen mit einem Durchmesser von 75 µm (Mikrometer) oder sogar kleiner eingesetzt. Hier kommen nur Durchflusszellen mit einem Volumen von 3-5 nl (Nanoliter) zum Einsatz.

Solche Zellen bestehen im Allgemeinen aus einer Quarzkapillare mit einem Innendurchmesser von 20-25 µm und einem Außendurchmesser von 280 µm. Mit anderen Worten steht dem Licht auf dem Weg zur Photodiode nur ein Spalt 300µm inklusive Kapillarführung zur Verfügung.

Diese geringe Lichttransmission versucht man dadurch zu kompensieren, indem das Licht sowohl beim Eingang in die Zelle als auch beim Ausgang durch Linsen fokussiert wird. Das erhöht zwar die Lichtmenge und reduziert das Rauschen, aber das Signal-Rauschverhältnis bleibt trotzdem unbefriedigend.

Die kommerziellen Detektoren auf dem Markt versuchen durch ihre interne Firmware das Beste aus der Situation herauszuholen. Da das von dem optischen Gitter kommende Licht wird in einen Referenz- und einen Sample-Kanal geteilt, wobei das Teilungsverhältnis durch die Hardwarekonstruktion stets unveränderbar ist. Die Belichtungszeiten der Referenz- und Samplefotodioden sind meistens automatisch so geregelt, dass das Referenzdiodensignal sicher unterhalb der Sättigungsgrenze bleibt. Diese Einstellung wiederum ist für die Samplediode nicht ausreichend, um das daraus resultierende Rauschen sinnvoll zu optimieren und zu reduzieren.

Beispiele für photometrische Einrichtungen mit einer Durchflusszelle sind aus der US 2003/174321 A1, der EP 0071645 B1, der DE 695 24 405 T2 und der DE 4308202 A1 bekannt. Die WO 2012/046096 A1 beschreibt eine Vorrichtung der eingangs genannten Art.

Die Aufgabe der vorliegenden Erfindung besteht darin, ein Photometer, das mit einer Nanozelle arbeitet, hinsichtlich der Signalauswertung zu verbessern.

Erfindungsgemäß wird die Aufgabe durch ein UV/VIS HPLC-Photometer der eingangs beschriebenen Art gelöst, bei welchem die Belichtungszeiten der Samplefotodiode und der Referenzfotodiode getrennt voneinander einstellbar sind, wobei eine Firmware dazu ausgebildet ist, die Belichtungszeiten der Samplefotodiode und der Referenzfotodiode automatisch einzustellen und die Belichtungszeiten individuell an ein Verhältnis der Lichtstärken in dem Samplelichtkanal und dem Referenzkanal durch den Benutzer anpassbar sind.

Durch die getroffene Maßnahme ist es möglich, die Belichtungszeiten der beiden eingesetzten Fotodioden individuell an das Verhältnis der Lichtstärken in den beiden Kanälen anzupassen. Dadurch kann die Belichtung für die Samplefotodiode empfindlicher eingestellt werden, ohne dass die Referenzfotodiode in den Sättigungsbereich gelangt.

Vorzugsweise erfolgt die Einstellung derart, dass die Belichtungszeit der Samplefotodiode gegenüber der Belichtungszeit der Referenzfotodiode deutlich größer ist. Eine andere Vorgehensweise kann sich dann ergeben, wenn die Lichtintensitäten der beiden Kanäle von Beginn an unterschiedlich gewählt ist oder Dioden mit unterschiedlichen Empfindlichkeiten zum Einsatz kommen.

In einer weiteren bevorzugten Ausführungsform der Erfindung ist vorgesehen, dass Messsignalverstärker für die digitalen Referenz- und Samplesignale der Referenz- und der Samplefotodioden in ihren Verstärkungsfaktoren getrennt voneinander einstellbar sind. Durch diese Maßnahme kann das Rauschen weiterhin um einen beträchtlichen Betrag reduziert werden. Da die digitalen Signale im übrigen weit weniger von anderen Rauschquellen beeinflusst werden, wird hauptsächlich das reine Diodensignal vorverstärkt.

Eine weitere bevorzugte Maßnahme zur Verbesserung des Signal-/Rauschverhältnisses besteht darin, digitale Softwarefilter vorzusehen, die das Rauschen als eine statistische Größe stärker dämpfen als die unregelmäßig auftretenden Fotodiodensignale.

Es hat sich gezeigt, dass die zuvor beschriebenen Maßnahmen im Verbund eine Reduzierung des Rauschens um den Faktor 10 und mehr ermöglichen. Je nach individuellen Gegebenheiten kann daher der Nutzer wählen, ob er die beschriebenen Maßnahmen einzeln anwendet oder ein im Ursprungszustand besonders ungünstiges Rauschverhältnis durch Anwendung aller Maßnahmen verbessert werden muss. Möglich ist es auch, die Rauschqualität nur durch Wahl des Verstärkungsfaktors oder nur durch den Einsatz von Softwarefiltern oder eine Kombination dieser beiden Maßnahmen zu verbessern.

Nachfolgend wird anhand der beigefügten Abbildungen näher auf ein Ausführungsbeispiel der Erfindung eingegangen. Es zeigen:
- Fig.1: eine schematische Darstellung einer Nano-Durchflusszelle mit Samplelichtkanal, und
- Fig.2: einen Screenshot zur Verdeutlichung der Wirkung der getroffenen Maßnahmen auf die Signalgüte.

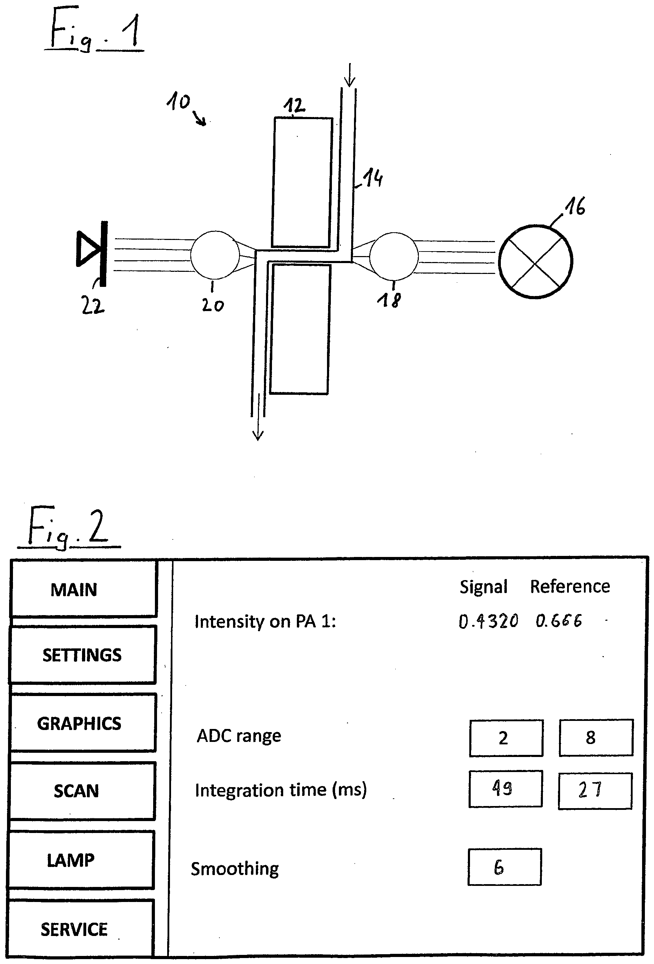

In Fig. 1 ist eine Nano-Durchflusszelle 10 gezeigt, die vereinfacht dargestellt eine Zellhalterung 12 und eine Quarzkapillare 14 besitzt, die zur Auswertung der durch die Quarzkapillare fließenden Probe mit einer Lichtquelle 16 durchstrahlt werden. Gezeigt ist in Fig. 1 nur der Samplelichtkanal, um die Problematik zu verdeutlichen.

Da die Auswertung immer kleinerer Probenvolumina gefordert wird, besitzt die Quarzkapillare 14 der Nanozelle 10 bei einem Außendurchmesser von 280 µm einen Innendurchmesser von 25 µm. Dies bedeutet, dass der Lichtspalt in der Zellhalterung 12 lediglich ungefähr 300 µm stark ist, so dass nur eine vergleichsweise geringe Lichtmenge die Durchflusszelle durchströmen kann. Eine erste Kollektorlinse 18 bündelt das Licht der Lichtquelle 16 vor dem Eintritt in den Lichtspalt, während eine zweite Kollektorlinse 20 den Lichtstrahl vor dem Auftreten auf eine Samplefotodiode 20 wieder aufweitet. Durch diese Maßnahmen kann zwar die Lichtmenge zur Reduzierung des Rauschens erhöht werden, als alleinige Maßnahme bleibt es aber dennoch bei einem unbefriedigenden Signal-Rauschverhältnis.

Weiterhin besitzt das Fotometer einen nicht gezeigten Referenzlichtkanal, der ebenfalls von der Lichtquelle 10 gespeist wird. Das Signal des Referenzlichtkanals wird von einer Referenzfotodiode (nicht gezeigt) ausgewertet, wobei naturgemäß dieses Lichtsignal stärker ist, da der Referenzlichtkanal nicht durch den schmalen Lichtspalt einer Nano-Durchflusszelle geleitet werden muss.

Der UV/VIS HLC-Detektor erlaubt eine getrennte Einstellung der Belichtungszeiten (Integration time) der beiden Fotodioden für die Auswertung des Sample- und Referenzkanals. Die Firmware stellt zwar automatisch, wie bei anderen Detektoren auch, eine quasi optimale Belichtungszeit ein, aber der Benutzer kann durch die getrennt einstellbaren Belichtungszeiten der Referenz- und Sample-Fotodioden das Rauschen erheblich reduzieren, indem die Belichtungszeit der Samplediode verlängert wird.

In einem zweiten Optimierungsschritt hat der Anwender die Möglichkeit, das digitale Signal der Sample-Diode anders als der Referenzdiode zu verstärken, nämlich höher (ADC-Range). Dadurch reduziert sich das Rauschen nochmals um einen beträchtlichen Betrag. Da die digitalen Signale weit weniger von anderen Rauschquellen beeinflusst werden, wird hauptsächlich das reine Diodensignal verstärkt.

Nach diesem zweiten Schritt hat der Anwender die Möglichkeit, Softwarefilter einzusetzen. Diese sind so konzipiert, dass das Rauschen als eine statistische Größe weit stärker gedämpft wird als die in unregelmäßigen Zeitabständen vorkommende Messsignale, die von dem Softwarefilter kaum beeinflusst werden.

Fig. 2 zeigt einen Screenshot einer beispielhaften Einstellung der Parameter. Die linke Spalte "Signal" gibt die Werte für den Samplelichtkanal und die rechte Spalte die Werte für den Referenzkanal an. Die erste Zeile (Intensity on PA1) gibt den Wert für die Singalstärke an. In der zweiten Zeile (ADC range) sind die Werte für den Verstärkungsfaktor angegeben, wobei die unterschiedlichen Werte zeigen sollen, dass dieser variabel ist, der Verstärkungsfaktor für den Referenzkanal muss nicht höher als der des Referenzkanals sein. Primär geht es bei der Einstellung des Verstärkungsfaktor um eine Optimierung des Samplediodensignals, das Referenzsignals ist in der Regel unproblematisch.

Die dritte Zeile (Integration Time (ms)) gibt die Werte für die Belichtungszeit an, die im gezeigten Beispiel für die Samplefotodiode fast doppelt so lange eingestellt worden ist wie für die Referenzfotodiode. Die letzte Zeile (Smoothing) bezeichnet den eingestellten Wert für das Maß der Filterung eines Softwarerauschfilters, der hier bei einer beispielhaften Skala von 1 bis 9 auf einem mittleren Wert 6 eingestellt worden ist.

Im Zusammenwirken können die oben beschrieben Parameter das Rauschen signifikant um den Faktor 10 und mehr reduzieren.

## Patentansprüche

1. UV-VIS HPLC-Fotometer mit einer Nano-Durchflusszelle, wobei eine Lichtquelle einen Referenz- und einen Samplelichtkanal speist und zur Auswertung des Referenzkanals eine Referenzfotodiode und zur Auswertung des Samplelichtkanals, der durch die Nano-Durchflusszelle (10) geführt ist, eine Samplefotodiode (22) vorgesehen ist, **dadurch gekennzeichnet, dass** die Belichtungszeiten der Samplefotodiode (22) und der Referenzfotodiode getrennt voneinander einstellbar sind, wobei eine Firmware dazu ausgebildet ist, die Belichtungszeiten der Samplefotodiode (22) und der Referenzfotodiode automatisch einzustellen und die Belichtungszeiten individuell an ein Verhältnis der Lichtstärken in dem Samplelichtkanal und dem Referenzkanal durch den Benutzer anpassbar sind.

2. UV-VIS HPLC-Fotometer nach Anspruch 1, **dadurch gekennzeichnet, dass** die Belichtungszeit der Samplefotodiode (22) gegenüber der Belichtungszeit der Referenzfotodiode größer gewählt ist.

3. UV-VIS HPLC-Fotometer nach einem der vorhergehenden Ansprüche, **dadurch gekennzeichnet, dass** Messsignalverstärker für die Signale der Referenz- und der Samplefotodiode in ihren Verstärkungsfaktoren getrennt voneinander einstellbar sind.

4. UV-VIS HPLC-Fotometer nach Anspruch 3, **dadurch gekennzeichnet, dass** der Verstärkungsfaktor des Samplediodensignals höher eingestellt ist als der Verstärkungsfaktor des Referenzdiodensignals.

5. UV-VIS HPLC-Fotometer nach einem der vorhergehenden Ansprüche, **dadurch gekennzeichnet, dass** digitale Softwarefilter vorgesehen sind, die das Rauschen als eine statistische Größe stärker dämpfen als die unregelmäßig auftretenden Messsignale.

## Claims

1. UV-VIS HPLC-Photometer having a nano-throughflow cell, wherein a light source feeds a reference light channel and a sample light channel and a reference photo diode is provided for evaluating the reference channel and a sample photo diode (22) is provided for evaluating the sample light channel, which is guided through the nano-throughflow cell (10), **characterised in that** the exposure times of the sample photo diode (22) and of the reference photo diode can be set separate from one another, wherein a firmware is configured to set automatically the exposure times of the sample photo diode (22) and of the reference photo diode and the exposure times can be individually customised by the user to a ratio of the light strengths in the sample light channel and the reference light channel.

2. UV-VIS HPLC-Photometer according to claim 1, **characterised in that** the exposure time of the sample photo diode (22) is selected greater than the exposure time of the reference photo diode.

3. UV-VIS HPLC-Photometer according to any of the preceding claims, **characterised in that** measuring signal amplifiers for the signals of the reference diode and the sample photo diode can be set separately from one another in their amplification factors.

4. UV-VIS HPLC-Photometer according to claim 3, **characterised in that** the amplification factor of the sample diode signal is set higher than the amplification factor of the reference diode signal.

5. UV-VIS HPLC-Photometer according to any of the preceding claims, **characterised in that** digital software filters are provided which dampen the noise as a statistical value more strongly than the irregularly occurring measuring signals.

## Revendications

1. Photomètre UV visible pour l'HPLC avec une nano-cellule de débit, dans lequel une source de lumière alimente un canal de lumière de référence et un canal de lumière d'échantillon et une photodiode de référence est prévue pour l'évaluation du canal de référence et une photodiode d'échantillon (22) est prévue pour l'évaluation du canal de lumière d'échantillon, qui est guidé à travers la nano-cellule de débit (10), **caractérisé en ce que** les temps d'exposition de la photodiode d'échantillon (22) et de la photodiode de référence sont réglables séparément l'un de l'autre, dans lequel un micrologiciel est réalisé afin de régler automatiquement les temps d'exposition de la photodiode d'échantillon (22) et de la photodiode de référence et les temps d'exposition sont adaptables individuellement à un rapport des intensités lumineuses dans le canal de lumière d'échantillon et le canal de lumière de référence par l'utilisateur.

2. Photomètre UV visible pour l'HPLC selon la revendication 1, **caractérisé en ce que** le temps d'exposition de la photodiode d'échantillon (22) est sélectionné pour être supérieur au temps d'exposition de la photodiode de référence.

3. Photomètre UV visible pour l'HPLC selon l'une quelconque des revendications précédentes, **caractérisé en ce que** des amplificateurs de signal de mesure pour les signaux de la photodiode de référence et de la photodiode d'échantillon sont réglables séparément l'un de l'autre au niveau de leurs facteurs d'amplification.

4. Photomètre UV visible pour l'HPLC selon la revendication 3, **caractérisé en ce que** le facteur d'amplification du signal de diode d'échantillon est réglé pour être supérieur au facteur d'amplification du signal de diode de référence.

5. Photomètre UV visible pour l'HPLC selon l'une quelconque des revendications précédentes, **caractérisé en ce que** des filtres de logiciel numériques sont prévus, qui amortissent davantage le bruit en tant que grandeur statique que les signaux de mesure survenant de manière irrégulière.
